# EUROPEAN PATENT APPLICATION

(11) **EP 4 806 742 A1**
(43) Date of publication of application: **16.09.2026**
(21) Application number: 24887531.2
(22) Date of filing: 14.08.2024
(51) Int. Cl.: B60W 30/06

(54) **METHOD AND APPARATUS FOR PLANNING PARKING TRAJECTORY, VEHICLE, COMPUTING DEVICE, AND STORAGE MEDIUM**

(30) Priority: 07.11.2023 CN 202311477322
(71) Applicant: BYD Company Limited, Shenzhen, Guangdong 518118 (CN)
(72) Inventor: LI, Jiaxin, Shenzhen, Guangdong 518118 (CN); HAN, Bing, Shenzhen, Guangdong 518118 (CN); XU, Chi, Shenzhen, Guangdong 518118 (CN)
(74) Representative: Mathys & Squire
(86) International application number: PCT/CN2024/111998
(87) International publication number: WO 2025/097911

(57) **Abstract**

Provided are a method and an apparatus for planning a parking trajectory, a vehicle, a computing device, and a storage medium. The method includes: obtaining a position of a vehicle outside a parking space and a position of the vehicle within the parking space, where the parking space is a region into which the vehicle is about to park into or out of which the vehicle is about to park out; and determining a target parking trajectory of the vehicle based on the position of the vehicle outside the parking space and the position of the vehicle within the parking space, where the target parking trajectory includes a transition curve, a straight line, and a circular arc, one transition curve connects one straight line and one circular arc, a curvature of the transition curve continuously changes as a length of the transition curve increases, and the vehicle is configured to park into or park out of the parking space based on the target parking trajectory.

## Description

This application claims priority to Chinese Patent Application No. 202311477322.0, filed with the China National Intellectual Property Administration on November 7, 2023 and entitled "METHOD AND RELATED APPARATUS FOR PLANNING PARKING TRAJECTORY", which is incorporated herein by reference in its entirety.

### TECHNICAL FIELD

This application relates to the field of automatic parking technologies, and in particular, to a method and an apparatus for planning a parking trajectory, a vehicle, a computing device, and a storage medium.

### BACKGROUND

For automatic parking, planning of a parking trajectory mainly includes: determining a start position and a target position of parking based on a dimension of a parking space and a parking position of a parked vehicle, and planning a drivable trajectory connecting the start position and the target position of parking in consideration of constraint conditions such as vehicle collision and vehicle kinematics.

In an existing solution, a geometric method of "straight line + circular arc" is generally used for trajectory planning. However, due to an abrupt change in curvature at a splicing of a straight line and a circular arc, if a steering wheel is turned when a vehicle stops at the splicing of the straight line and the circular arc, riding experience of a user is affected. If the steering wheel is turned while the vehicle is driving at the splicing of the straight line and the circular arc, an actual driving trajectory of the vehicle is deviated from a planned trajectory, thereby sacrificing accuracy of vehicle trajectory tracking.

### SUMMARY

Embodiments of this application provide a method and an apparatus for planning a parking trajectory, a vehicle, a computing device, and a storage medium. A parking trajectory is generated by performing geometric transformation on a transition curve, which can ensure that the parking trajectory has a continuous curvature, and avoid a situation in which a vehicle stops during parking, thereby improving parking experience of a user.

According to a first aspect, an embodiment of this application provides a method for planning a parking trajectory. The method includes:
obtaining a position of a vehicle outside a parking space and a position of the vehicle within the parking space, wherein the parking space is a region into which the vehicle is about to park into or out of which the vehicle is about to park out; and
determining a target parking trajectory of the vehicle based on the position of the vehicle outside the parking space and the position of the vehicle within the parking space, wherein the target parking trajectory includes a transition curve, a straight line, and a circular arc, one transition curve connects one straight line and one circular arc, a curvature of the transition curve continuously changes as a length of the transition curve increases, and the vehicle is configured to park into or park out of the parking space based on the target parking trajectory.

In the foregoing method, obtaining the position of the vehicle outside the parking space and the position of the vehicle within the parking space is to determine a start position and a target position during parking. Feasibility of parking into and out of a parking space is taken into account, which can improve accuracy and safety of parking. Based on a characteristic that any point on the transition curve has a continuous curvature, continuity of a curvature of the target parking trajectory can be ensured by determining the target parking trajectory through the transition curve, the straight line, and the circular arc. Unlike an existing solution in which a complex function is used to fit a parking trajectory curve to eliminate a problem of an abrupt change in curvature at a connection point of a circular arc and a straight line, in this application, a transition curve is used to connect a straight line and a circular arc, which is simpler and improves real-time performance of determining a parking trajectory and usability in actual engineering.

In some implementations of the first aspect, a curvature of a first endpoint of the transition curve used to connect the straight line is the same as a curvature of the straight line, and a curvature of a second endpoint of the transition curve used to connect the circular arc is the same as a curvature of the circular arc.

In the foregoing method, in the transition curve, the curvature of the first endpoint used to connect the straight line is the same as the curvature of the straight line, and the curvature of the second endpoint used to connect the circular arc is the same as the curvature of the circular arc. This enables the obtained parking trajectory to be more in line with characteristics of the vehicle, thereby improving accuracy of the parking trajectory.

In some implementations of the first aspect, the length of the transition curve is determined by a difference between the curvature of the first endpoint and the curvature of the second endpoint, and the greater the difference is, the greater the length of the transition curve is.

In the foregoing method, the length of the transition curve is determined based on the difference between the curvature of the first endpoint and the curvature of the second endpoint, that is, the length of the curve is determined based on the difference between the curvature of the straight line connected to the first endpoint and the curvature of the circular arc connected to the second endpoint. In this way, after the transition curve connects the straight line and the circular arc, the determined parking trajectory can have a continuous curvature.

In some implementations of the first aspect, the transition curve has a first endpoint and a second endpoint, a curvature of the first endpoint is the same as a curvature of the straight line connected to the first endpoint of the transition curve, and a curvature of the second endpoint is the same as a curvature of the circular arc connected to the second endpoint of the transition curve.

In some implementations of the first aspect, a quantity of transition curves is equal to a quantity of splicing endpoint pairs, and the splicing endpoint pair includes an endpoint of the transition curve connected to the straight line and an endpoint of the transition curve connected to the circular arc.

In the foregoing method, the quantity of transition curves is equal to the quantity of splicing endpoint pairs, and the quantity of transition curves can be determined based on the quantity of splicing endpoint pairs without complex mathematical calculation. This can resolve a problem of an abrupt change in curvature at a connection of a circular arc and a straight line, and improve parking experience of the user.

In some implementations of the first aspect, the circular arc includes a first circular arc and a second circular arc, the first circular arc is a circular arc within the parking space, and the second circular arc is a circular arc outside the parking space; the transition curve includes a first transition curve, a second transition curve, and a third transition curve; and the first transition curve is determined by the first circular arc, and the second transition curve and the third transition curve are determined by the second circular arc.

In the foregoing method, the circular arc of the parking trajectory includes the circular arc within the parking space and the circular arc outside the parking space, the first transition curve is determined based on the circular arc within the parking space, and the second transition curve and the third transition curve are determined based on the circular arc outside the parking space, so that the first transition curve, the second transition curve, and the third transition curve that are determined satisfy an actual requirement of vehicle parking.

In some implementations of the first aspect, the straight line includes a first straight line and a second straight line, wherein
the first transition curve connects the first circular arc and the first straight line;
the second transition curve connects the first straight line and the second circular arc;
   and
the third transition curve connects the second circular arc and the second straight line.

In the foregoing method, the first transition curve connects the first circular arc and the first straight line, the second transition curve connects the first straight line and the second circular arc, and the third transition curve connects the second circular arc and the second straight line. This can enable a parking trajectory including the first circular arc, the second circular arc, the first straight line, and the second straight line to have a continuous curvature.

In some implementations of the first aspect, the first transition curve is determined based on a curvature of the first circular arc and a curvature of the first straight line, a maximum curvature of the first transition curve is the curvature of the first circular arc, and a minimum curvature of the first transition curve is the curvature of the first straight line.

In the foregoing method, the curvature of the first transition curve can be specifically determined by the curvature of the first circular arc and the curvature of the first straight line. Specifically, the maximum curvature of the first transition curve is the curvature of the first circular arc, and the minimum curvature of the first transition curve is the curvature of the first straight line. The first transition curve can be used to eliminate an abrupt change in curvature between the first circular arc and the first straight line. The vehicle parks based on a parking trajectory determined by the first circular arc, the first transition curve, and the first straight line, without having to stop and then turn a steering wheel, thereby improving parking experience of the user.

In some implementations of the first aspect, the second transition curve is determined based on a curvature of the second circular arc and the curvature of the first straight line, a maximum curvature of the second transition curve is the curvature of the second circular arc, and a minimum curvature of the second transition curve is the curvature of the first straight line.

In the foregoing method, the curvature of the second transition curve can be specifically determined by the curvature of the second circular arc and the curvature of the first straight line. Specifically, the maximum curvature of the second transition curve is the curvature of the second circular arc, and the minimum curvature of the second transition curve is the curvature of the first straight line. The second transition curve can be used to eliminate an abrupt change in curvature between the second circular arc and the first straight line. The vehicle parks based on a parking trajectory determined by the second circular arc, the second transition curve, and the first straight line, without having to stop and then turn a steering wheel, thereby improving parking experience of the user.

In some implementations of the first aspect, the third transition curve is determined based on the curvature of the second circular arc and a curvature of the second straight line, a maximum curvature of the third transition curve is the curvature of the second circular arc, and a minimum curvature of the third transition curve is the curvature of the second straight line.

In the foregoing method, the curvature of the third transition curve can be specifically determined by the curvature of the second circular arc and the curvature of the second straight line. Specifically, the maximum curvature of the third transition curve is the curvature of the second circular arc, and the minimum curvature of the third transition curve is the curvature of the second straight line. The third transition curve can be used to eliminate an abrupt change in curvature between the second circular arc and the second straight line. The vehicle parks based on a parking trajectory determined by the second circular arc, the third transition curve, and the second straight line, without having to stop and then turn a steering wheel, thereby improving parking experience of the user.

In some implementations of the first aspect, a radius of the first circular arc is a minimum turning radius of the vehicle, and a minimum central angle of the first circular arc is related to the position of the vehicle within the parking space.

In the foregoing method, because the first circular arc is a circular arc within the parking space, if the radius of the first circular arc is the minimum turning radius of the vehicle, a trajectory formed by turning of the vehicle within the parking space is also the minimum. This can ensure safety of the vehicle in a process of parking into the parking space and parking out of the parking space.

In some implementations of the first aspect, a radius of the second circular arc is greater than or equal to the minimum turning radius of the vehicle and is less than or equal to twice the minimum turning radius, a central angle of the second circular arc is related to the first circular arc, the second transition curve, the third transition curve, and the second straight line, and the second straight line is related to the position of the vehicle outside the parking space.

In the foregoing method, the radius of the second circular arc may be greater than or equal to the minimum turning radius of the vehicle, thereby ensuring accuracy and reliability of a parking trajectory in a case that an angle at which the vehicle parks into a position outside the parking space is not parallel to the parking space.

In some implementations of the first aspect, the method further includes:
determining a plurality of parking trajectories by sampling a central angle of the first circular arc and the radius of the second circular arc; and
screening the plurality of parking trajectories based on a drivable and parkable region of the vehicle to determine the target parking trajectory.

In the foregoing method, the plurality of parking trajectories are determined by sampling, and then the plurality of parking trajectories are screened based on the drivable and parkable region to finally determine the target parking trajectory. This enables the determined target parking trajectory to be optimal and satisfies a requirement of the drivable and parkable region.

According to a second aspect, an embodiment of this application provides an apparatus for planning a parking trajectory. The apparatus includes:
a communication unit, configured to obtain a position of a vehicle outside a parking space and a position of the vehicle within the parking space, wherein the parking space is a region into which the vehicle is about to park into or out of which the vehicle is about to park out; and
a processing unit, configured to determine a target parking trajectory of the vehicle based on the position of the vehicle outside the parking space and the position of the vehicle within the parking space, wherein the target parking trajectory includes a transition curve, a straight line, and a circular arc, one transition curve connects one straight line and one circular arc, a curvature of the transition curve continuously changes as a length of the transition curve increases, and the vehicle is configured to park into or park out of the parking space based on the target parking trajectory.

In some implementations of the second aspect, a curvature of a first endpoint of the transition curve used to connect the straight line is the same as a curvature of the straight line, and a curvature of a second endpoint of the transition curve used to connect the circular arc is the same as a curvature of the circular arc.

In some implementations of the second aspect, the length of the transition curve is determined by a difference between the curvature of the first endpoint and the curvature of the second endpoint, and the greater the difference is, the greater the length of the transition curve is.

In some implementations of the second aspect, a quantity of transition curves is equal to a quantity of splicing endpoint pairs, and the splicing endpoint pair includes an endpoint of the transition curve connected to the straight line and an endpoint of the transition curve connected to the circular arc.

In some implementations of the second aspect, the circular arc includes a first circular arc and a second circular arc, the first circular arc is a circular arc within the parking space, and the second circular arc is a circular arc outside the parking space; the transition curve includes a first transition curve, a second transition curve, and a third transition curve; and
the first transition curve is determined by the first circular arc, and the second transition curve and the third transition curve are determined by the second circular arc.
In some implementations of the second aspect, the straight line includes a first straight line and a second straight line, wherein
the first transition curve is used to connect the first circular arc and the first straight line;
the second transition curve is used to connect the first straight line and the second circular arc; and
the third transition curve is used to connect the second circular arc and the second straight line.

In some implementations of the second aspect, the first transition curve is determined based on a curvature of the first circular arc and a curvature of the first straight line, a maximum curvature of the first transition curve is the curvature of the first circular arc, and a minimum curvature of the first transition curve is the curvature of the first straight line.

In some implementations of the second aspect, the second transition curve is determined based on a curvature of the second circular arc and the curvature of the first straight line, a maximum curvature of the second transition curve is the curvature of the second circular arc, and a minimum curvature of the second transition curve is the curvature of the first straight line.

In some implementations of the second aspect, the third transition curve is determined based on the curvature of the second circular arc and a curvature of the second straight line, a maximum curvature of the third transition curve is the curvature of the second circular arc, and a minimum curvature of the third transition curve is the curvature of the second straight line.

In some implementations of the second aspect, a radius of the first circular arc is a minimum turning radius of the vehicle, and a minimum central angle of the first circular arc is related to the position of the vehicle within the parking space.

In some implementations of the second aspect, a radius of the second circular arc is greater than or equal to the minimum turning radius of the vehicle and is less than or equal to twice the minimum turning radius, a central angle of the second circular arc is related to the first circular arc, the second transition curve, the third transition curve, and the second straight line, and the second straight line is related to the position of the vehicle outside the parking space.

In some implementations of the second aspect, the method further includes:
a processing unit, configured to determine a plurality of parking trajectories by sampling a central angle of the first circular arc and the radius of the second circular arc; and
a processing unit, configured to screen the plurality of parking trajectories based on a drivable and parkable region of the vehicle to determine the target parking trajectory.

According to a third aspect, an embodiment of this application provides a vehicle. The vehicle includes a processor and a memory, and the processor is coupled to the memory. The memory is configured to store a computer program, and the processor is configured to invoke and run the computer program, to enable the vehicle to perform the method described in any implementation of the first aspect.

According to a fourth aspect, an embodiment of this application provides a computing device. The computing device includes a processor and a memory, and the processor is coupled to the memory. The memory is configured to store a computer program, and the processor is configured to invoke and run the computer program, to enable the computing device to perform the method described in any implementation of the first aspect.

Optionally, the computing device further includes a communication interface. The communication interface is configured to receive and/or send data, and/or the communication interface is configured to provide input and/or output for the processor.

It will be noted that the foregoing embodiment is described by using an example in which a processor (or referred to as a general-purpose processor) performs the method by invoking computer selection. In a specific implementation process, the processor may alternatively be a dedicated processor. In this case, the computer instructions are already loaded into the processor in advance. Optionally, the processor may further include both a dedicated processor and a general-purpose processor.

Optionally, the processor and the memory may be integrated into one component, that is, the processor and the memory may be integrated together.

According to a fifth aspect, an embodiment of this application provides a computer-readable storage medium. The computer-readable storage medium stores a computer program, and when the computer program runs on a computer or a processor, the method described in any implementation of the first aspect is implemented.

For beneficial effects of the technical solutions provided in the second aspect to the fifth aspect of this application, refer to the beneficial effects of the technical solutions in the first aspect. Details are not described herein again.

### BRIEF DESCRIPTION OF DRAWINGS

The following briefly describes the accompanying drawings required for describing the embodiments.
FIG. 1 is a schematic diagram of an architecture of a vehicle according to an embodiment of this application;
FIG. 2 is a schematic flowchart of a method for planning a parking trajectory according to an embodiment of this application;
FIG. 3 is a schematic diagram of a drivable and parkable space according to an embodiment of this application;
FIG. 4 is a schematic diagram of parking into a parking space according to an embodiment of this application;
FIG. 5 is a schematic diagram of parking out of a parking space according to an embodiment of this application;
FIG. 6 is a schematic diagram of a parking trajectory according to an embodiment of this application;
FIG. 7 is a schematic diagram of determining a first portion of a parking trajectory according to an embodiment of this application;
FIG. 8 is a schematic diagram of a transition curve and a circular arc according to an embodiment of this application;
FIG. 9 is a schematic diagram of a transition curve and a circular arc according to another embodiment of this application;
FIG. 10 is a schematic diagram of performing geometric transformation according to an embodiment of this application;
FIG. 11 is a schematic diagram of determining a second portion of a parking trajectory according to an embodiment of this application;
FIG. 12A to FIG. 12C are schematic diagrams of determining a collision risk according to an embodiment of this application;
FIG. 13A and FIG. 13B are schematic diagrams of a first simulation result according to an embodiment of this application;
FIG. 14A and FIG. 14B are schematic diagrams of a second simulation result according to an embodiment of this application;
FIG. 15A and FIG. 15B are schematic diagrams of a third simulation result according to an embodiment of this application;
FIG. 16A and FIG. 16B are schematic diagrams of a fourth simulation result according to an embodiment of this application;
FIG. 17 is a block diagram of a functional unit composition of an apparatus for planning a parking trajectory according to an embodiment of this application;
FIG. 18 is a schematic diagram of a structure of a computing device according to an embodiment of this application; and
FIG. 19 is a schematic diagram of a structure of a vehicle according to an embodiment of this application.

### DESCRIPTION OF EMBODIMENTS

The following describes embodiments of this application in detail with reference to the accompanying drawings.

Terms such as "first", "second", "third", and "fourth" in the specification, claims, and accompanying drawings of this application are used to distinguish between different objects, and are not used to describe a specific sequence. In addition, terms "include" and "have" and any variations thereof are intended to cover non-exclusive inclusion. For example, a process, a method, a system, a product, or a device that includes a series of operations or units is not limited to listed operations or units, but optionally further includes operations or units that are not listed, or optionally further includes other operations or units inherent to the process, the method, the product, or the device.

The following describes a system architecture applied in the embodiments of this application. It will be noted that a system architecture and a business scenario described in this application are intended to describe the technical solutions of this application more clearly, and do not constitute a limitation on the technical solutions provided in this application. It can be learned by a person of ordinary skill in the art that, with evolution of the system architecture and emergence of a new business scenario, the technical solutions provided in this application are also applicable to similar technical problems.

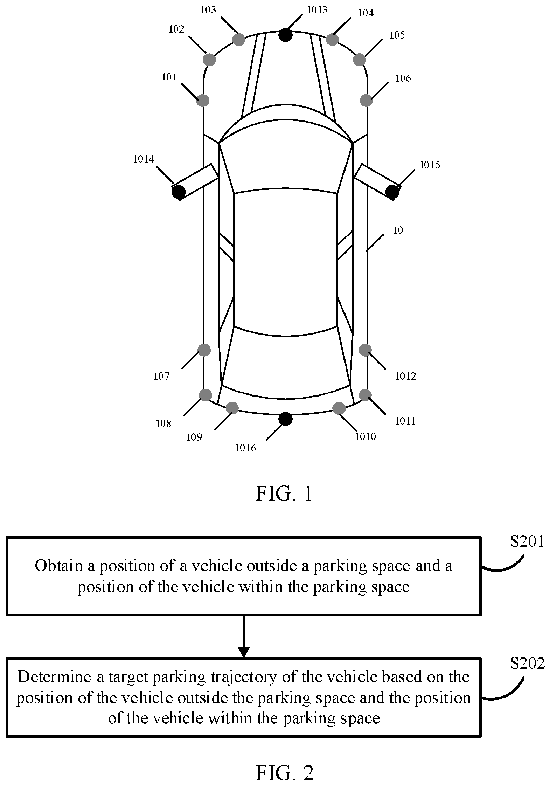

Referring to FIG. 1, FIG. 1 is a schematic diagram of an architecture of a vehicle according to an embodiment of this application. As shown in FIG. 1, the vehicle 10 includes one or more radars and/or one or more cameras.

The vehicle 10 may be a vehicle driven by electric energy, a vehicle driven by fuel, or a vehicle driven by new energy hybrid power. For example, when the vehicle 10 is a vehicle driven by electric energy, the vehicle 10 may be a new energy vehicle, such as a battery electric vehicle, a range-extended electric vehicle, a hybrid electric vehicle, and a fuel cell electric vehicle. When the vehicle 10 is a vehicle driven by fuel, the vehicle 10 may be an automobile, an agricultural transport vehicle, a tractor, a trailer, or the like. When the vehicle 10 is an automobile, the vehicle 10 may be a car, an off-road vehicle, a truck, a bus, a van, or the like.

The one or more radars are configured to sense a distance between the vehicle 10 and a surrounding object when the vehicle automatically parks, so that an empty parking space can be found more accurately. In a process of determining a parking trajectory, the vehicle 10 can determine a position of the vehicle outside a parking space and a position of the vehicle within the parking space based on data collected by the radar and based on a structural parameter of the vehicle 10. FIG. 1 shows an example of a total of 12 radars from radar 101 to radar 1012, which are configured for ranging a front, a rear, and a side of the vehicle 10.

The one or more cameras are configured to detect a parking space and sense a distance between the vehicle 10 and a surrounding object in automatic parking. In a process of determining a parking trajectory, the vehicle 10 can determine a position of the vehicle outside a parking space and a position of the vehicle within the parking space based on data collected by the camera and based on a structural parameter of the vehicle 10. FIG. 1 shows an example of a front-view camera 1013, a left-side-view camera 1014, a right-side-view camera 1015, and a rear-view camera 1016. It may be understood that cameras in different directions are configured to monitor conditions in front of, on a left side of, on a right side of, and/or behind the vehicle 10.

Referring to FIG. 2, FIG. 2 is a schematic flowchart of a method for planning a parking trajectory according to an embodiment of this application. The method is applied to the vehicle shown in FIG. 1. As shown in FIG. 2, the method includes but is not limited to the following operations.

S201: obtain a position of a vehicle outside a parking space and a position of the vehicle within the parking space.

Specifically, first, before parking into or out of the parking space, the vehicle can monitor a surrounding environment through a radar or an in-vehicle camera to determine a drivable and parkable space. Then, the vehicle updates a theoretically drivable and parkable space based on a constraint condition of parking into or out of the parking space and a parking curve type, to obtain a start position and a target position that satisfy an actual parking requirement, that is, the position of the vehicle outside the parking space and the position of the vehicle within the parking space. For example, in a case that the vehicle is parking into the parking space, the parking space is a region into which the vehicle is parking into, the start position is the position outside the parking space, and the target position is the position within the parking space. In a case that the vehicle is parking out of the parking space, the parking space is a region out of which the vehicle is parking out, the start position is the position within the parking space, and the target position is the position outside the parking space.

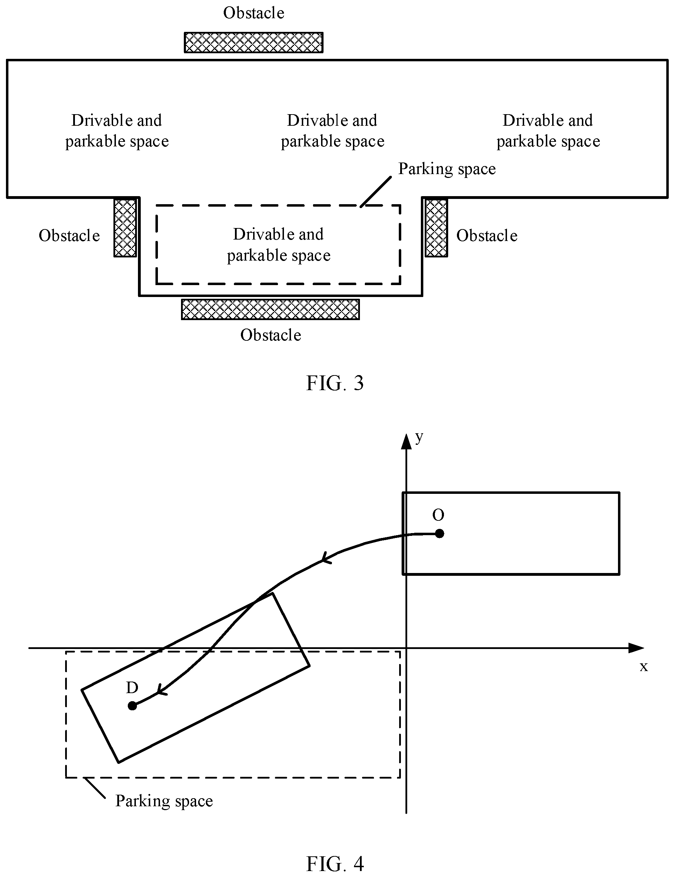

For example, referring to FIG. 3, FIG. 3 is a schematic diagram of a drivable and parkable space according to an embodiment of this application. As shown in FIG. 3, the vehicle can determine a distance to an obstacle or a position of the obstacle through a radar or an in-vehicle camera, and then determine a drivable and parkable space based on an external dimension of the vehicle. The drivable and parkable space is a region in or into which the vehicle can drive or park, and the vehicle drives or parks in or into the drivable and parkable space without collision. For example, when the vehicle is parking into a parking space, a required minimum parking space dimension can be determined based on a related parameter of the vehicle. Then, the vehicle can determine an available parking space, such as a parallel parking space in FIG. 3, from the drivable and parkable space through a radar or an in-vehicle camera.

Referring to FIG. 4, FIG. 4 is a schematic diagram of parking into a parking space according to an embodiment of this application. As shown in FIG. 4, a local parking space coordinate system is established with an upper right corner of the parking space as an origin, where a horizontal axis is an x-axis, and a vertical axis is a y-axis. The position of the vehicle outside the parking space, that is, the start position of the vehicle parking into the parking space, is a point O. The position of the vehicle within the parking space, that is, the target position of the vehicle parking into the parking space, is a point D. A curve between the point O and the point D is a planned trajectory of the vehicle parking into the parking space, and the planned trajectory is similar to a curve formed by splicing two segments of circular arcs.

The point O may be a pose point of the vehicle outside the parking space. A heading angle O_{φ} of the vehicle at the point O is within a range of [-15°, 15°]. This is because if the heading angle O_{φ} of the vehicle at the point O is 0°, before the vehicle parks into the parking space, the vehicle needs to be first adjusted to a position completely parallel to the parking space. However, for a user driving a vehicle, it is relatively difficult to adjust the vehicle to be completely parallel to the parking space. Therefore, in this embodiment of this application, a specific margin of tolerance is set for the heading angle of the vehicle at the start position (the point O) of parking into the parking space. In this application, a parking trajectory can be planned for the vehicle provided that the heading angle of the vehicle at the point O is adjusted to be within the range of [-15°, 15°]. For example, the heading angle of the vehicle at the point O may be adjusted to an upward tilt of 15° (relative to the x-axis) for a front end of the vehicle, or the heading angle of the vehicle at the point O may be adjusted to a downward tilt of 15° (relative to the x-axis) for the front end of the vehicle.

For example, when a length of the parking space shown in FIG. 4 is greater than a threshold, it indicates that a space length available for vehicle parking is relatively great. In this case, the vehicle can directly park into the parking space, and the vehicle parks in the middle of the parking space in a good pose without having to perform maneuver in the parking space. The maneuver refers to a process in which the vehicle completely parks into the parking space without collision through a forward action and/or a backward action of the vehicle. The foregoing description "the vehicle parks in the middle of the parking space in a good pose" may be that the vehicle parks in the middle of the parking space in a pose parallel to the parking space. Therefore, in a case that the length of the parking space is greater than the threshold, the vehicle may be parallel to the parking space at the point D. Therefore, in this case, a heading angle D_{φ} of the vehicle at the point D is 0.

For example, when the length of the parking space shown in FIG. 4 is less than or equal to the threshold, it indicates that a space length available for vehicle parking is relatively small. For example, there is another vehicle parked or there is another obstacle in front of and behind the parking space. In this case, after the vehicle parks into the point D within the parking space, maneuver further needs to be performed to enable the vehicle to park in the middle of the parking space in a pose parallel to the parking space. Therefore, in a case that the length of the parking space is less than or equal to the threshold, the vehicle is not parallel to the parking space when parking into the point D of the parking space. Therefore, in this case, a heading angle D_{φ} of the vehicle at the point D is greater than 0.

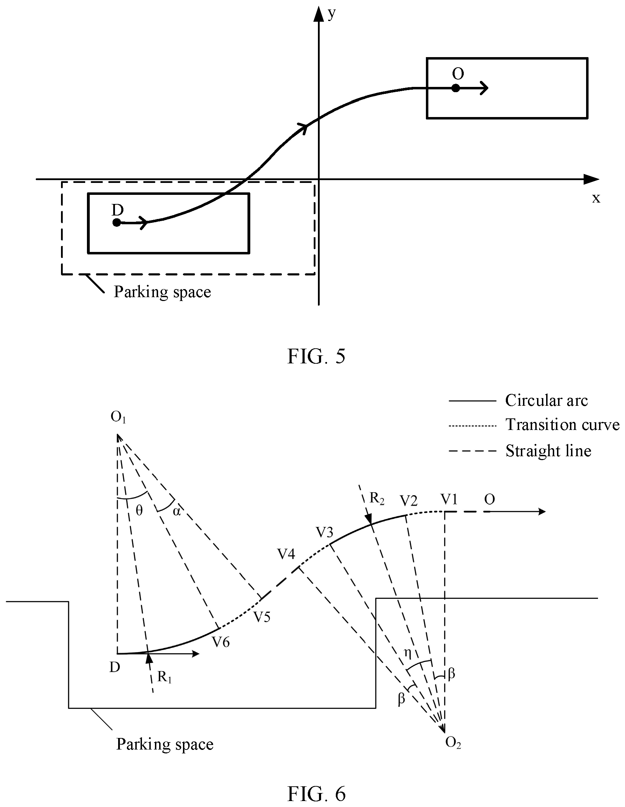

Referring to FIG. 5, FIG. 5 is a schematic diagram of parking out of a parking space according to an embodiment of this application. As shown in FIG. 5, a local parking space coordinate system is established with an upper right corner of the parking space as an origin, where a horizontal axis is an x-axis, and a vertical axis is a y-axis. The position of the vehicle within the parking space, that is, the start position of the vehicle parking out of the parking space, is a point D. The position of the vehicle outside the parking space, that is, the target position of the vehicle parking out of the parking space, is a point O. A curve between the point D and the point O is a planned trajectory of the vehicle parking out of the parking space, and the planned trajectory is similar to a curve formed by splicing two segments of circular arcs.

The point O may be a pose point of the vehicle outside the parking space. A heading angle O_{φ} of the vehicle at the point O may be 0°. It may be understood that if the heading angle O_{φ} of the vehicle at the point O is 0°, the vehicle reaches the target position in a pose parallel to the parking space after parking out of the parking space, so as to facilitate subsequent vehicle driving.

For example, when a length of the parking space shown in FIG. 5 is greater than a threshold, it indicates that a space length available for vehicle parking out is relatively great. The vehicle may directly park out of the parking space without performing maneuver in the parking space, or the vehicle may first drive straight back and then park out of the parking space. The maneuver refers to a process in which the vehicle completely parks out of the parking space without collision through a forward action and/or a backward action of the vehicle. Therefore, in the case that the length of the parking space is greater than the threshold, the vehicle can park out of the parking space in a pose parallel to the parking space at the point D. Therefore, in this case, a heading angle D_{φ} of the vehicle at the point D is 0.

For example, when the length of the parking space shown in FIG. 5 is less than or equal to the threshold, it indicates that a space length available for vehicle parking out is relatively small. For example, there is another vehicle parked or there is another obstacle in front of and behind the parking space. In this case, there is a risk of collision if the vehicle directly parks out of the parking space from the point D. Therefore, maneuver needs to be performed to adjust an angle between the vehicle and the parking space before the vehicle can park out of the parking space without collision. Therefore, in the case that the length of the parking space is less than or equal to the threshold, the vehicle may first perform maneuver to adjust the angle between the vehicle and the parking space, and then park out of the parking space from the point D. Therefore, in this case, the vehicle is not parallel to the parking space at the point D, that is, a heading angle D_{φ} of the vehicle at the point D is greater than 0.

S202: determine a target parking trajectory of the vehicle based on the position of the vehicle outside the parking space and the position of the vehicle within the parking space.

Specifically, the vehicle can determine a multi-segment curve with a continuous curvature based on the position of the vehicle outside the parking space and the position of the vehicle within the parking space that are obtained in operation S201 and based on the transition curve, the straight line, and the circular arc, so as to serve as the target parking trajectory of the vehicle. In a case that the vehicle is parking into the parking space, the vehicle can park into the parking space based on the foregoing target parking trajectory. In a case that the vehicle is parking out of the parking space, the vehicle can park out of the parking space based on the foregoing target parking trajectory.

In some implementations, the target parking trajectory of the vehicle includes one or more of a circular arc, a transition curve, or a straight line.

The transition curve is a transition curve segment that connects two segments of curves and that satisfies a certain continuity condition at a connection. For example, the transition curve may be an easement curve. The easement curve is a curve whose curvature continuously changes between a straight line and a circular arc and between a circular arc and a circular arc in plane alignment. The transition curve provided in this embodiment of this application is in a form of a helix, and any point in the transition curve has a continuous curvature. A transition curve is used to connect a straight line and a circular arc, and a curvature of the transition curve continuously changes as a length of the transition curve increases.

In some implementations, for the transition curve between the straight line and the circular arc, a curvature of a first endpoint of the transition curve used to connect the straight line is the same as a curvature of the straight line, and a curvature of a second endpoint of the transition curve used to connect the circular arc is the same as a curvature of the circular arc.

Specifically, in an existing solution, a parking trajectory of a vehicle is generally a combination of a circular arc and a straight line. However, there is a problem of an abrupt change in curvature at a splicing of the straight line and the circular arc. Therefore, in this embodiment of this application, the circular arc and the straight line are connected through the transition curve, which can resolve a problem of an abrupt change in curvature at a splicing of the straight line and the circular arc. For example, a radius of the circular arc is a turning radius of the vehicle, a curvature of any point on the circular arc is a reciprocal of the turning radius, and the curvature of the straight line is 0. Therefore, the curvature of the transition curve used to connect the circular arc and the straight line can continuously change from 0 to the reciprocal of the turning radius of the vehicle, that is, it can be ensured that the entire parking trajectory has a continuous curvature provided that the curvature of the transition curve is greater than or equal to 0 and is less than or equal to the reciprocal of the turning radius.

Referring to FIG. 6, FIG. 6 is a schematic diagram of a parking trajectory according to an embodiment of this application. As shown in FIG. 6, a point O is a position of the vehicle outside the parking space, and a point D is a position of the vehicle within the parking space. In a case that the vehicle is parking into the parking space, the parking trajectory is O→V1→V2→V3→V4→V5→V6→D. In a case that the vehicle is parking out of the parking space, the parking trajectory is D→V6→V5→V4→V3→V2→V1→O. A curve DV6 and a curve V2V3 are circular arcs, a curve V1V2, a curve V3V4, and a curve V5V6 are transition curves, and a straight line OV1 and a straight line V4V5 are straight lines. A circle center corresponding to the circular arc DV6 is O₁, a central angle corresponding thereto is θ, a radius corresponding thereto is R₁, and a curvature corresponding thereto is 1/ R₁ . A curvature radius of the transition curve V5V6 is R₁, and a rotation angle thereof is α. A curvature of the transition curve V5V6 at a point V5 is 0, and a curvature of the transition curve V5V6 at a point V6 is 1/ R₁ . A circle center corresponding to the circular arc V2V3 is O₂, a central angle corresponding thereto is η, a radius corresponding thereto is R₂ , and a curvature corresponding thereto is 1/ R₂ . A curvature radius of the transition curve V1V2 and the transition curve V3V4 is R₂, and a rotation angle thereof is β. A curvature of the transition curve V1V2 at a point V1 is 0, and a curvature of the transition curve V1V2 at a point V2 is 1/ R₂. A curvature of the transition curve V3V4 at a point V3 is 1/ R₂, and a curvature of the transition curve V3V4 at a point V4 is 0.

In some implementations, the length of the transition curve is determined by a difference between the curvature of the first endpoint and the curvature of the second endpoint, and the greater the difference is, the greater the length of the transition curve is.

The curvature of the transition curve can continuously change from the curvature of the first endpoint to the curvature of the second endpoint. Therefore, the greater the difference between the curvature of the first endpoint and the curvature of the second endpoint is, the greater the length of the transition curve is.

In some implementations, a quantity of transition curves is equal to a quantity of splicing endpoint pairs, and the splicing endpoint pair includes an endpoint of the transition curve connected to the straight line and an endpoint of the transition curve connected to the circular arc.

Specifically, the transition curve is used to connect the straight line and the circular arc. Therefore, the quantity of transition curves can be determined by the quantity of splicing endpoint pairs.

In some implementations, the circular arc in the parking trajectory includes a first circular arc and a second circular arc, the first circular arc is a circular arc within the parking space, and the second circular arc is a circular arc outside the parking space. The transition curve includes a first transition curve, a second transition curve, and a third transition curve. The first transition curve is determined by the first circular arc, and the second transition curve and the third transition curve are determined by the second circular arc.

In some implementations, the straight line includes a first straight line and a second straight line, the first transition curve is used to connect the first circular arc and the first straight line, the second transition curve is used to connect the first straight line and the second circular arc, and the third transition curve is used to connect the second circular arc and the second straight line.

For example, still referring to FIG. 6, the curve DV6 is the first circular arc and the curve V2V3 is the second circular arc. The curve V5V6 is the first transition curve, the curve V3V4 is the second transition curve, and the curve V1V2 is the third transition curve. The straight line V4V5 is the first straight line and the straight line OV1 is the second straight line. The first transition curve V5V6 is used to connect the first circular arc DV6 and the first straight line V4V5, the second transition curve V3V4 is used to connect the first straight line V4V5 and the second circular arc V2V3, and the third transition curve V1V2 is used to connect the second circular arc V2V3 and the second straight line OV1.

In some implementations, geometric transformation is first performed on the first transition curve based on the position of the vehicle within the parking space, to determine a first portion of the parking trajectory. Then, geometric transformation is performed on the second transition curve and the third transition curve based on the first portion of the parking trajectory and the position of the vehicle outside the parking space, to determine a second portion of the parking trajectory. Finally, the vehicle determines the (target) parking trajectory based on the first portion of the parking trajectory and the second portion of the parking trajectory.

For example, still referring to FIG. 6, a curve DV5 is the first portion of the parking trajectory and a curve V4V1 is the second portion of the parking trajectory.

Specifically, geometric transformation is performed on the first transition curve based on the position (the point D) of the vehicle within the parking space, for example, geometric transformation such as translation, rotation, or mirroring is performed, and the first transition curve is determined as the transition curve V5V6, thereby determining that the first portion of the parking trajectory is the curve DV5. Then, geometric transformation is performed on the third transition curve and the second transition curve based on the curve DV5 and the point O, and the third transition curve is determined as the curve V1V2 and the second transition curve is determined as the curve V3V4, thereby determining that the second portion of the parking trajectory is the curve V4V1. Finally, the (target) parking trajectory of the vehicle is determined as a curve OD based on the curve DV5 and the curve V4V1.

In some implementations, a radius of the first circular arc is a minimum turning radius of the vehicle, and a minimum central angle of the first circular arc is related to the position of the vehicle within the parking space.

Specifically, to ensure that a distance traveled by the vehicle within the parking space is relatively small and no collision occurs, the minimum turning radius of the vehicle can be used as the radius of the first circular arc; and the minimum central angle of the first circular arc is determined based on the position of the vehicle within the parking space.

In some implementations, the first circular arc is determined based on the turning radius and the central angle of the vehicle; and the first portion of the parking trajectory is determined by performing geometric transformation on the first transition curve based on an endpoint of the first circular arc. The central angle is an angle corresponding to the turning radius.

In this application, a circular arc may be a trajectory generated when the vehicle parks into or parks out of the parking space by rotating wheels by a certain angle. Therefore, to ensure that the vehicle moves a relatively small distance within the parking space and no collision occurs, the position (that is, the point D) of the vehicle within the parking space can be determined as a first endpoint of the first circular arc. Then, a second endpoint of the first circular arc is determined as an endpoint of the first transition curve, and geometric transformation is performed on the first transition curve. In this way, the first circular arc and the first straight line can be connected through the first transition curve, so as to eliminate a problem of an abrupt change in curvature at a connection of the circular arc and the straight line.

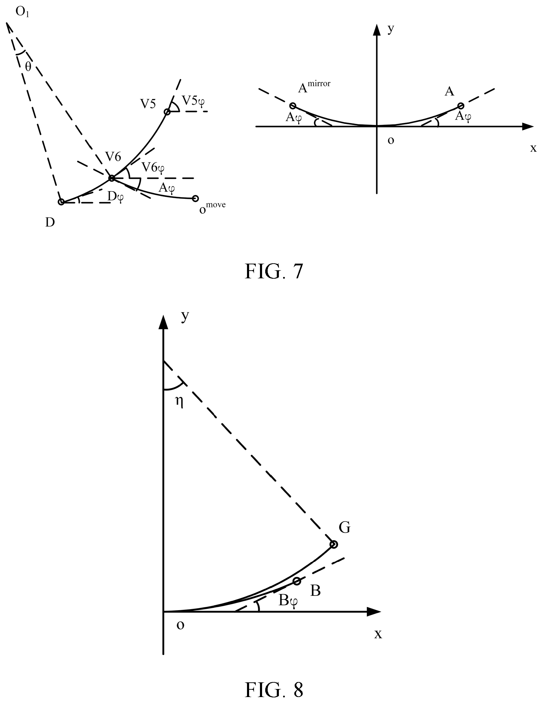

Referring to FIG. 7, FIG. 7 is a schematic diagram of determining a first portion of a parking trajectory according to an embodiment of this application. As shown in FIG. 7, details of determining the first portion of the parking trajectory are as follows.

Step 1: determine the (first) circular arc DV6. Specifically, a local parking space coordinate system is established with an upper right corner of the parking space as an origin, and coordinates of the point D are determined based on the position of the vehicle within the parking space that is obtained by operation S201. To ensure that the vehicle moves a relatively small distance within the parking space and no collision occurs, in this embodiment of this application, the minimum turning radius of the vehicle is used as a radius R₁ of the circular arc DV6. A circle center of the circular arc DV6 is O₁, and a sampling range of a central angle θ thereof is [θ^{min}, θ^{min} +10°], where θ^{min} is a minimum feasible central angle of the circular arc DV6. When the central angle of the circular arc DV6 is θ^{min}, the vehicle can drive out of the parking space along a straight line from the point V6 without collision.

The central angle θ is determined from the sampling range of the central angle θ based on a preset step size; and coordinates (*V*6*ₓ, V*6*_{y}, V*6*_{φ}*) of the point V6 are determined based on the coordinates of the point D, the central angle θ, and the radius R₁, thereby determining the circular arc DV6. *V*6*_{φ}* is an included angle between a tangent line of the point V6 and a horizontal line.

Step 2: determine the first transition curve. The first transition curve is determined based on a curvature of the first circular arc and a curvature of the first straight line, a maximum curvature of the first transition curve is the curvature of the first circular arc, and a minimum curvature of the first transition curve is the curvature of the first straight line.

For example, a curvature radius of the first transition curve is the radius R₁ of the circular arc DV6, and a curvature thereof continuously changes from 0 to $\frac{1}{{R}_{1}}$. The vehicle can generate a helical curve oA whose curvature change rate is C₁ at the origin of the coordinate system as the first transition curve, and an included angle *A_{φ}* between a tangent line of a point A and the horizontal line is $\frac{1}{2 {C}_{1} {R}_{1}^{2}}$. The origin of the coordinate system is o, a horizontal axis of the coordinate system is an x-axis, and a vertical axis thereof is a y-axis.

Coordinates *p*(*x, y, φ*) of any point P on the helical curve oA are a function of *φ. φ* is an included angle between a tangent line of a point P and the horizontal line, where *φ* ∈ [0, *A_{φ}*]. A calculation formula for the coordinates *p*(*x, y, φ*) of the point P is as follows: ${p}_{x} = \sqrt{\frac{2 φ}{{C}_{1}}} ⋅ {\sum }_{n = 0}^{∞} {\left(-1\right)}^{n} \frac{{φ}^{2 n}}{\left(2n\right) ! \left(4n+1\right)}$ ${p}_{y} = \sqrt{\frac{2 φ}{{C}_{1}}} ⋅ {\sum }_{n = 0}^{∞} {\left(-1\right)}^{n} \frac{{φ}^{2 n + 1}}{\left(2n+1\right) ! \left(4n+3\right)}$ ${p}_{φ} = φ$

*pₓ* is a horizontal coordinate of the point P, *p_{y}* is a vertical coordinate of the point P, *p_{φ}* is the included angle between the tangent line of the point P and the horizontal line, n is a natural number greater than or equal to 0, and C₁ is a curvature change rate of the helical curve oA.

Step 3: the vehicle uses the y-axis as a symmetric axis to make a mirror curve oA^{mirror} of the curve oA.

Step 4: the vehicle uses *A^{mirror}* as a base point, and translates a curve oA^{mirror} to the point V6 to obtain a curve V6o^{move}.

Step 5: the vehicle rotates the curve V6o^{move} counterclockwise by an angle of *V6,* with the point V6 as a circle center, and then rotates the curve counterclockwise by an angle of *A_{φ}* to obtain the first transition curve V5V6. Therefore, the vehicle can determine that the first portion of the parking trajectory is the curve DV5. A calculation formula for the included angle *V*6*_{φ}* between the tangent line of the point V6 and the horizontal line and an included angle *V*5*_{φ}* between a tangent line of the point V5 and the horizontal line is as follows: $V {6}_{φ} = {D}_{φ} + θ$ $V {5}_{φ} = V {6}_{φ} + {A}_{φ}$

D_{φ} is an included angle between a tangent line of the point D and the horizontal line, *A_{φ}* is the included angle between the tangent line of the point A and the horizontal line, and θ is a central angle of the circular arc DV6.

In some implementations, after determining the first portion of the parking trajectory, the vehicle can determine a position of the second portion of the parking trajectory based on the first portion of the parking trajectory and the position of the vehicle outside the parking space; and the vehicle can perform geometric transformation on the third transition curve and the second transition curve based on the position of the second portion to determine the second portion of the parking trajectory.

Specifically, details that the vehicle determines the second portion of the parking trajectory are as follows.

Step 1: generate a third transition curve. The third transition curve is determined based on the curvature of the second circular arc and a curvature of the second straight line, a maximum curvature of the third transition curve is the curvature of the second circular arc, and a minimum curvature of the third transition curve is the curvature of the second straight line.

For example, referring to FIG. 8, FIG. 8 is a schematic diagram of a transition curve and a circular arc according to an embodiment of this application. As shown in FIG. 8, the vehicle generates, at the origin of the coordinate system, a helical curve oB whose curvature change rate C₂ is constant and whose curvature continuously changes from 0 to $\frac{1}{{R}_{2}}$. R₂ is the turning radius of the vehicle, and an included angle *B_{φ}* between a tangent line of a point B and the horizontal line is $\frac{1}{2 {C}_{2} {R}_{2}^{2}}$.

Step 2: generate a second circular arc. A radius of the second circular arc is greater than or equal to the minimum turning radius of the vehicle and is less than or equal to twice the minimum turning radius, a central angle of the second circular arc is related to the first circular arc, the second transition curve, the third transition curve, and the second straight line, and the second straight line is related to the position of the vehicle outside the parking space.

Still referring to FIG. 8, the vehicle generates a circular arc oG with a radius of R₂ and a central angle of η at the origin of the coordinate system. The origin of the coordinate system is o, a horizontal axis of the coordinate system is an x-axis, and a vertical axis thereof is a y-axis. R₂ is the turning radius of the vehicle, and a sampling range of R₂ is [*R^{min}*, 2·*R^{min}*], and *R^{min}* is the minimum turning radius of the vehicle. Based on a geometric relationship of the parking trajectory in FIG. 6, the central angle η can be determined by using the following relation: $η = V {5}_{φ} - 2 ⋅ \frac{1}{2 {C}_{2} {R}_{2}^{2}} - {O}_{φ}$

*V*5*_{φ}* is the included angle between the tangent line of the point V5 and the horizontal line, and can be determined from FIG. 7. $\frac{1}{2 {C}_{2} {R}_{2}^{2}}$ is a rotation angle between the third transition curve and the second transition curve, and O_{φ} is an included angle between a tangent line of the position of the vehicle outside the parking space and the horizontal line.

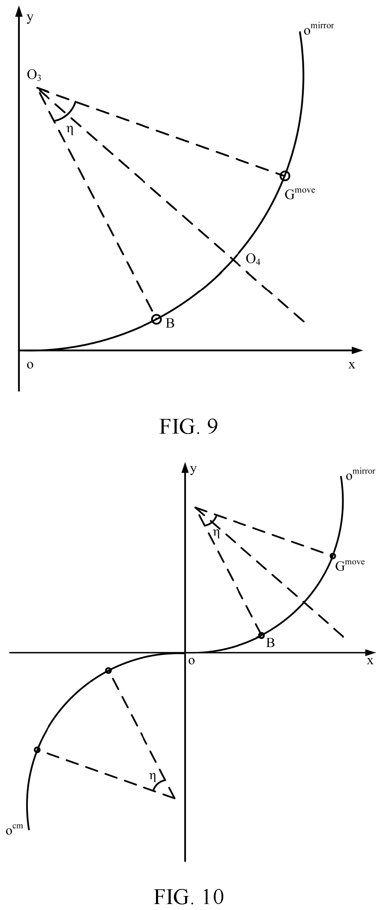

Step 3: referring to FIG. 9, FIG. 9 is a schematic diagram of a transition curve and a circular arc according to another embodiment of this application. As shown in FIG. 9, the vehicle uses an origin o of a coordinate system as a base point, and translates the circular arc oG to the point B to obtain a curve BG. Then, the vehicle rotates the curve BG counterclockwise around the point B by an angle corresponding to *B_{φ}* to obtain a circular arc BG^{move}. The angle corresponding to *B_{φ}* is $\frac{1}{2 {C}_{2} {R}_{2}^{2}}$. The origin of the coordinate system is o, a horizontal axis of the coordinate system is an x-axis, a vertical axis thereof is a y-axis, and a central angle of the circular arc BG^{move} is η.

Step 4: generate a second transition curve. Still referring to FIG. 9, the vehicle determines a mirror curve G^{move}o^{mirror} of the helical curve oB by using a straight line O₃O₄ formed by connecting a circle center O₃ of the circular arc BG^{move} and a midpoint O₄ of the circular arc BG^{move} as a symmetric axis. The mirror curve G^{move}o^{mirror} is the second transition curve. The second transition curve is determined based on a curvature of the second circular arc and the curvature of the first straight line, a maximum curvature of the second transition curve is the curvature of the second circular arc, and a minimum curvature of the second transition curve is the curvature of the first straight line.

Step 5: referring to FIG. 10, FIG. 10 is a schematic diagram of performing geometric transformation according to an embodiment of this application. As shown in FIG. 10, the vehicle makes a center symmetric mirror curve o^{cm}o of a multi-segment curve oo^{mirror} with an origin o of a coordinate system. The central angle of the circular arc BG^{move} is η, the origin of the coordinate system is o, a horizontal axis of the coordinate system is an x-axis, and a vertical axis thereof is a y-axis.

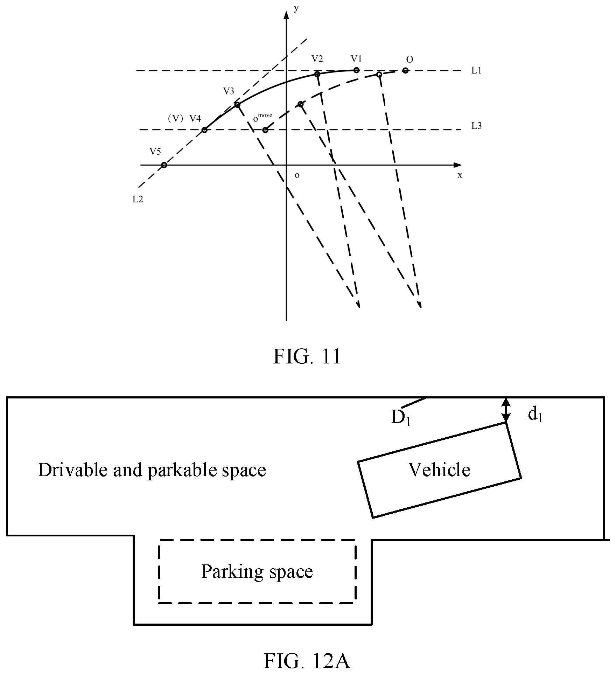

Step 6: referring to FIG. 11, FIG. 11 is a schematic diagram of determining a second portion of a parking trajectory according to an embodiment of this application. As shown in FIG. 11, the vehicle uses an origin point o of a coordinate system as a base point, and translates the multi-segment curve o^{cm}o to the point O to obtain a multi-segment curve o^{move}O. The point O is the position of the vehicle outside the parking space, the origin of the coordinate system is o, a horizontal axis of the coordinate system is an x-axis, and a vertical axis thereof is a y-axis.

Step 7: still referring to FIG. 11, a straight line in which the point O is located is L1, a straight line in which the point V5 is located is L2, and a straight line L3 parallel and L1 is drawn through a point o^{move}. The vehicle can determine coordinates (*Vₓ,V_{y},V_{φ}*) of an intersection point V of the straight line L2 and the straight line L3 based on the geometric relationship. Coordinates (V5*ₓ*, V5*_{y}*, V5*_{φ}*) of the point V5 can be determined from FIG. 7.

Step 8: if *Vₓ* ≥ V5*ₓ* and *V_{y}* ≥ V5*_{y}* that are obtained in Step 7, the vehicle uses o^{move} as a base point, and translates the multi-segment curve o^{move}O to a point V, and the point V is designated as the point V4. In addition, a tangent point between the curve o^{move}O and the straight line L1 is designated as V1, thereby obtaining a second portion V1V4 of the parking trajectory including the circular arc V2V3, the third transition curve V1V2, and the second transition curve V3V4. On the contrary, if coordinates of the point V obtained in step 7 do not satisfy conditions of *Vₓ* ≥ V5*ₓ* and *V_{y}* ≥ V5*_{y}*, there is no feasible circular arc and transition curve.

Finally, the vehicle determines the parking trajectory of the vehicle based on the first portion of the parking trajectory obtained from FIG. 7 and the second portion of the parking trajectory obtained from FIG. 11. Specifically, the vehicle connects the point V4 and the point V5 through the straight line V4V5, and connects the point O and the point V1 through the straight line OV1, thereby forming the parking trajectory OD shown in FIG. 6.

In some implementations, the vehicle determines a plurality of parking trajectories by sampling a central angle of the first circular arc and the radius of the second circular arc, and then screens the plurality of parking trajectories based on a drivable and parkable region of the vehicle to determine the target parking trajectory.

Specifically, it can be learned from the foregoing that a sampling range of the central angle θ of the circular arc DV6 is [θ^{min}, θ^{min} +10°], and a sampling range of a radius R₂ of the circular arc V2V3 is [*R^{min}*, 2·*R^{min}*]. Therefore, the vehicle can determine one or more sampling values of the central angle θ from the sampling range of the central angle θ based on a preset step size, and determine one or more sampling values of the radius R₂ from the sampling range of the radius R₂ based on the preset step size. Then, the vehicle determines one or more sampling trajectories based on the one or more sampling values of the central angle θ and the one or more sampling values of the radius R₂. Finally, the vehicle determines an optimal sampling trajectory from the one or more sampling trajectories as the parking trajectory of the vehicle based on a collision constraint condition and a trajectory cost.

In some implementations, the collision constraint condition of the vehicle refers to a condition in which the vehicle does not collide with another object in a process of parking into or out of the parking space. Specifically, for the collision constraint condition of the vehicle, a collision risk can be determined based on a distance between the vehicle and an obstacle.

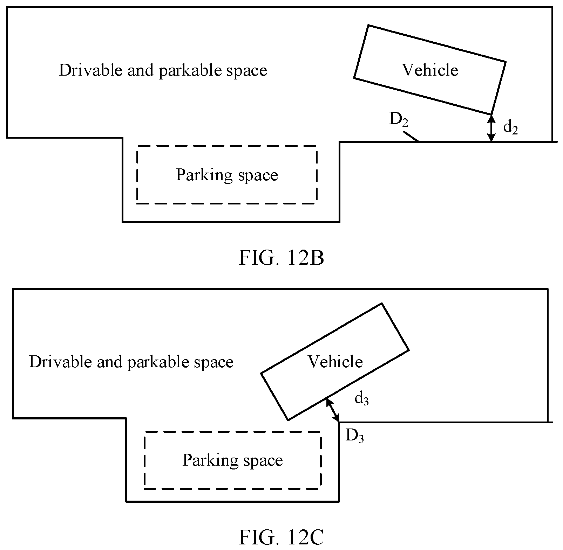

For example, referring to FIG. 12A to FIG. 12C, FIG. 12A to FIG. 12C are schematic diagrams of determining a collision risk according to an embodiment of this application. FIG. 12A is a schematic diagram of a front left corner of a vehicle, FIG. 12B is a schematic diagram of a front right corner of a vehicle, and FIG. 12C is a schematic diagram of a rear right wheel of a vehicle.

As shown in FIG. 12A, in a process in which the vehicle parks into the parking space or parks out of the parking space, the front left corner of the vehicle is likely to collide with an obstacle represented by a straight line D₁ in the drivable and parkable space. Therefore, a vertical distance between the front left corner of the vehicle and the straight line D₁ needs to be considered. For example, the vehicle obtains a minimum vertical distance d₁ between the front left corner and the straight line D₁ in the sampling trajectory.

As shown in FIG. 12B, in a process in which the vehicle parks into the parking space or parks out of the parking space, the front right corner of the vehicle is likely to collide with an obstacle represented by a straight line D₂ in the drivable and parkable space. Therefore, a vertical distance between the front right corner of the vehicle and the straight line D₂ needs to be considered. For example, the vehicle obtains a minimum vertical distance d₂ between the front right corner and the straight line D₂ in the sampling trajectory.

As shown in FIG. 12C, in a process in which the vehicle parks into the parking space or parks out of the parking space, the rear right wheel of the vehicle is likely to collide with an obstacle represented by a point D₃ in the drivable and parkable space. Therefore, a vertical distance between the rear right wheel of the vehicle and the point D₃ needs to be considered. For example, the vehicle obtains a minimum vertical distance d₃ between the rear right wheel and the point D₃ in the sampling trajectory.

Then, the vehicle determines a collision risk *col^{risk}* of the sampling trajectory based on the following formula: ${col}^{risk} = \frac{1}{{d}_{1}} + \frac{1}{{d}_{2}} + \frac{1}{{d}_{3}}$

In some implementations, the trajectory cost of the sampling trajectory can be determined based on the collision risk and a quantity of gear shifts. The vehicle selects a sampling trajectory with a lowest trajectory cost from trajectory costs corresponding to the plurality of sampling trajectories as the parking trajectory of the vehicle. A relation for calculating the trajectory cost is as follows: $cost = {cost}^{shift} ⋅ {n}^{shift} + {cost}^{risk} ⋅ {col}^{risk}$

*cost* is the trajectory cost of the sampling trajectory, *cost^{shift}* is a unit cost of the quantity of gear shifts, *n^{shift}* is the quantity of gear shifts, *cost^{risk}* is a unit cost of the collision risk, and *col^{risk}* is the collision risk.

The gear shifting means switching between a forward gear and a reverse gear in the vehicle. For example, if the vehicle shifts from the reverse gear to the forward gear in a case that the vehicle is parking into the parking space, the vehicle needs to first drive forward and then switch back to the reverse gear to continue parking into the parking space. Compared with a situation in which the vehicle directly parks into the parking space in a reverse gear state, efficiency is low and a cost is high. Therefore, the unit cost of the quantity of gear shifts may be greater than the unit cost of the collision risk. The quantity of gear shifts can be determined based on horizontal coordinates of an endpoint O and an endpoint V1 of the straight line OV1 in the sampling trajectory. If the horizontal coordinate of the endpoint V1 is less than or equal to the horizontal coordinate of the endpoint O, that is, when V1*ₓ* ≤ *Oₓ*, the quantity of gear shifts *n^{shift}* of the vehicle is 0. On the contrary, if the horizontal coordinate of the endpoint V1 is greater than the horizontal coordinate of the endpoint O, that is, when V1*ₓ* > *Oₓ*, the quantity of gear shifts *n^{shift}* of the vehicle is 1.

The following describes results of simulation tests performed based on a method for planning a parking trajectory provided in this application.

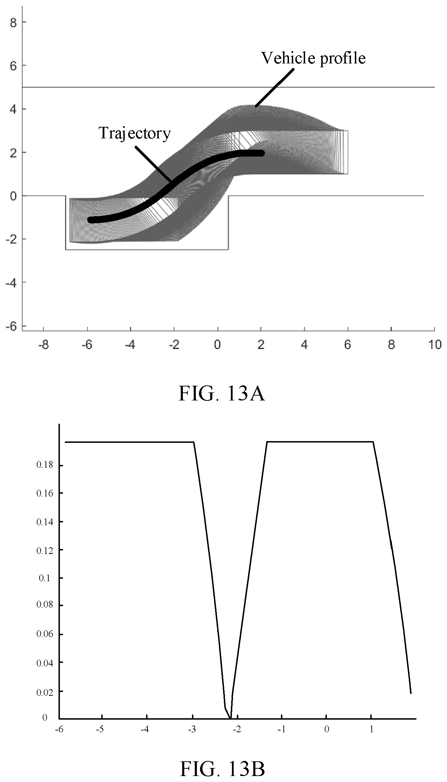

Referring to FIG. 13A and FIG. 13B, FIG. 13A and FIG. 13B are schematic diagrams of a first simulation result according to an embodiment of this application. FIG. 13A is a schematic diagram of a trajectory of a vehicle, and FIG. 13B is a line chart of a curvature of a trajectory.

As shown in FIG. 13A, FIG. 13A is a schematic diagram of a parking trajectory of a vehicle and a vehicle profile when the vehicle performs parking based on the parking trajectory. The horizontal axis and the vertical axis are position coordinates of the vehicle. The horizontal axis exemplarily shows a total of 10 coordinate values from -8 to 10, and the vertical axis exemplarily shows a total of 8 coordinate values from -6 to 8. The trajectory shown in FIG. 13A may be a parking-into trajectory of the vehicle parking into a non-narrow parking space when a parking angle of the vehicle is horizontal to the non-narrow parking space, or a parking-out trajectory when the vehicle parks out of the non-narrow parking space.

As shown in FIG. 13B, FIG. 13B is a curvature corresponding to the parking trajectory in FIG. 13A. The horizontal axis is a horizontal coordinate of a trajectory point corresponding to a curvature, and the vertical axis is a value of the curvature. The horizontal axis exemplarily shows a total of 8 coordinate values from -6 to 1, and the vertical axis exemplarily shows a total of 10 coordinate values from 0 to 0.18. It can be learned from FIG. 13B that the curvature corresponding to the parking trajectory in FIG. 13A is continuous, and a problem of an abrupt change in curvature does not exist.

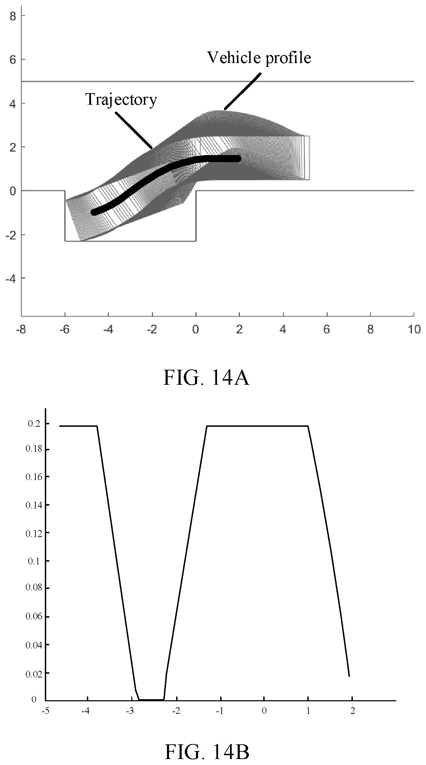

Referring to FIG. 14A and FIG. 14B, FIG. 14A and FIG. 14B are schematic diagrams of a second simulation result according to an embodiment of this application. FIG. 14A is a schematic diagram of a trajectory of a vehicle, and FIG. 14B is a line chart of a curvature of a trajectory.

As shown in FIG. 14A, FIG. 14A is a schematic diagram of a parking trajectory of a vehicle and a vehicle profile when the vehicle performs parking based on the parking trajectory. The horizontal axis and the vertical axis are position coordinates of the vehicle. The horizontal axis exemplarily shows a total of 10 coordinate values from -8 to 10, and the vertical axis exemplarily shows a total of 7 coordinate values from -4 to 8. The trajectory shown in FIG. 14A may be a parking-into trajectory of the vehicle parking into a narrow parking space when a parking angle of the vehicle is horizontal to the narrow parking space, or a parking-out trajectory when the vehicle parks out of the narrow parking space.

As shown in FIG. 14B, FIG. 14B is a curvature corresponding to the parking trajectory in FIG. 14A. The horizontal axis is a horizontal coordinate of a trajectory point corresponding to a curvature, and the vertical axis is a value of the curvature. The horizontal axis exemplarily shows a total of 8 coordinate values from -5 to 2, and the vertical axis exemplarily shows a total of 11 coordinate values from 0 to 0.2. It can be learned from FIG. 14B that the curvature corresponding to the parking trajectory in FIG. 14A is continuous, and a problem of an abrupt change in curvature does not exist.

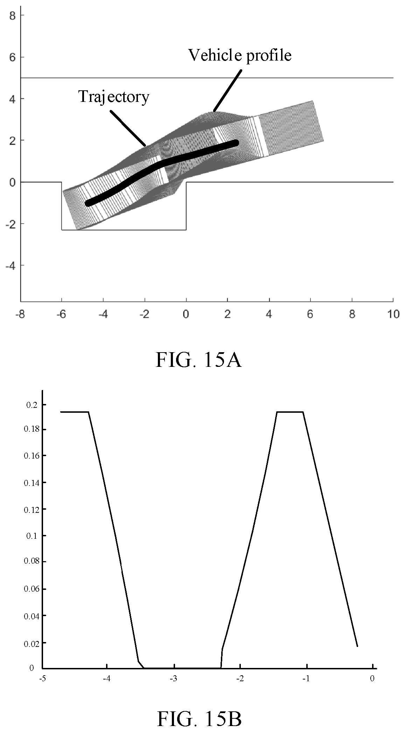

Referring to FIG. 15A and FIG. 15B, FIG. 15A and FIG. 15B are schematic diagrams of a third simulation result according to an embodiment of this application. FIG. 15A is a schematic diagram of a trajectory of a vehicle, and FIG. 15B is a line chart of a curvature of a trajectory.

As shown in FIG. 15A, FIG. 15A is a schematic diagram of a parking trajectory of a vehicle and a vehicle profile when the vehicle performs parking based on the parking trajectory. The horizontal axis and the vertical axis are position coordinates of the vehicle. The horizontal axis exemplarily shows a total of 10 coordinate values from -8 to 10, and the vertical axis exemplarily shows a total of 7 coordinate values from -4 to 8. The trajectory shown in FIG. 15A may be a parking-into trajectory with an upward tilt of a front end of the vehicle when the vehicle starts to park into a narrow parking space, and an included angle between the vehicle and the horizontal line is 15°.

As shown in FIG. 15B, FIG. 15B is a curvature corresponding to the parking trajectory in FIG. 15A. The horizontal axis is a horizontal coordinate of a trajectory point corresponding to a curvature, and the vertical axis is a value of the curvature. The horizontal axis exemplarily shows a total of 6 coordinate values from -5 to 0, and the vertical axis exemplarily shows a total of 11 coordinate values from 0 to 0.2. It can be learned from FIG. 15B that the curvature corresponding to the parking trajectory in FIG. 15A is continuous, and a problem of an abrupt change in curvature does not exist.

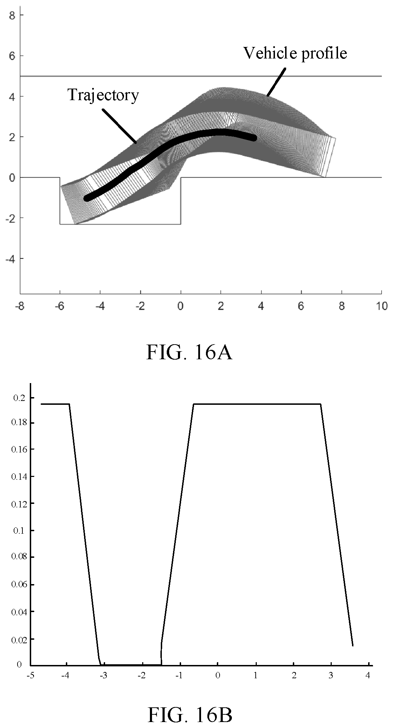

Referring to FIG. 16A and FIG. 16B, FIG. 16A and FIG. 16B are schematic diagrams of a fourth simulation result according to an embodiment of this application. FIG. 16A is a schematic diagram of a trajectory of a vehicle, and FIG. 16B is a line chart of a curvature of a trajectory.

As shown in FIG. 16A, FIG. 16A is a schematic diagram of a parking trajectory of a vehicle and a vehicle profile when the vehicle performs parking based on the parking trajectory. The horizontal axis and the vertical axis are position coordinates of the vehicle. The horizontal axis exemplarily shows a total of 10 coordinate values from -8 to 10, and the vertical axis exemplarily shows a total of 7 coordinate values from -4 to 8. The trajectory shown in FIG. 16A may be a parking-into trajectory with a downward tilt of a front end of the vehicle when the vehicle starts to park into a narrow parking space, and an included angle between the vehicle and the horizontal line is -15°.

As shown in FIG. 16B, FIG. 16B is a curvature corresponding to the parking trajectory in FIG. 16A. The horizontal axis is a horizontal coordinate of a trajectory point corresponding to a curvature, and the vertical axis is a value of the curvature. The horizontal axis exemplarily shows a total of 10 coordinate values from -5 to 4, and the vertical axis exemplarily shows a total of 11 coordinate values from 0 to 0.2. It can be learned from FIG. 16B that the curvature corresponding to the parking trajectory in FIG. 16A is continuous, and a problem of an abrupt change in curvature does not exist.

In summary, it can be learned from FIG. 13A, FIG. 13B, FIG. 14A, FIG. 14B, FIG. 15A, FIG. 15B, FIG. 16A, and FIG. 16B that, according to this embodiment of this application, parking trajectory planning for parking into or out of a conventional parking space and a narrow parking space can be supported. In addition, this embodiment of this application can further support, when an included angle between a parking angle of the vehicle and the horizontal line is within a range of [-15°, 15°], parking trajectory planning for parking into a conventional parking space or a narrow parking space. All parking trajectories planned based on this embodiment of this application can effectively avoid an obstacle without switching gears, and the parking trajectory has a continuous curvature, and there is no problem of an abrupt change in curvature that affects user experience.

The foregoing describes the method in the embodiments of this application in detail, and the following provides an apparatus in the embodiments of this application.

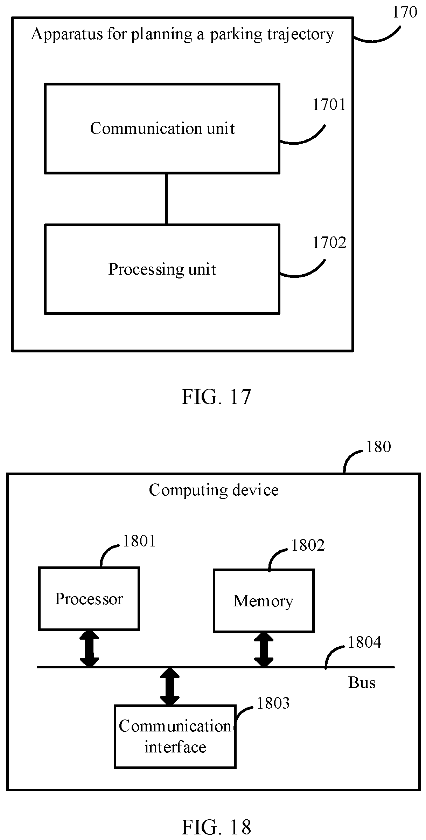

Referring to FIG. 17, FIG. 17 is a block diagram of a functional unit composition of an apparatus for planning a parking trajectory according to an embodiment of this application. The apparatus 170 for planning a parking trajectory may include a communication unit 1701 and a processing unit 1702. The apparatus 170 for planning a parking trajectory is configured to implement the foregoing method for planning a parking trajectory, such as the method for planning a parking trajectory shown in FIG. 2.

It will be noted herein that the division of a plurality of units is merely logical division performed based on a function, and does not constitute a limitation on a specific structure of the apparatus 170 for planning a parking trajectory. In a specific implementation, some functional modules may be subdivided into more small functional modules, and some functional modules may alternatively be combined into one functional module.

In some implementations, the communication unit 1701 is configured to obtain a position of a vehicle outside a parking space and a position of the vehicle within the parking space, where the parking space is a region into which the vehicle parks into or out of which the vehicle parks out; and
the processing unit 1702 is configured to determine a target parking trajectory of the vehicle based on the position of the vehicle outside the parking space and the position of the vehicle within the parking space, where a shape of the target parking trajectory includes a transition curve, a straight line, and a circular arc, the transition curve is used to connect the straight line and the circular arc, a curvature of the transition curve continuously changes as a length of the transition curve increases, and the vehicle is configured to park into or park out of the parking space based on the target parking trajectory.

In some other implementations, a curvature of a first endpoint of the transition curve used to connect the straight line is the same as a curvature of the straight line, and a curvature of a second endpoint of the transition curve used to connect the circular arc is the same as a curvature of the circular arc.

In some other implementations, the length of the transition curve is determined by a difference between the curvature of the first endpoint and the curvature of the second endpoint, and the greater the difference is, the greater the length of the transition curve is.

In some other implementations, a quantity of transition curves is equal to a quantity of splicing endpoint pairs, and the splicing endpoint pair includes an endpoint of the transition curve connected to the straight line and an endpoint of the transition curve connected to the circular arc.

In some other implementations, the circular arc includes a first circular arc and a second circular arc, the first circular arc is a circular arc within the parking space, and the second circular arc is a circular arc outside the parking space; the transition curve includes a first transition curve, a second transition curve, and a third transition curve; and
the first transition curve is determined by the first circular arc, and the second transition curve and the third transition curve are determined by the second circular arc.

In some other implementations, the straight line includes a first straight line and a second straight line, where
the first transition curve is used to connect the first circular arc and the first straight line;
the second transition curve is used to connect the first straight line and the second circular arc; and
the third transition curve is used to connect the second circular arc and the second straight line.

In some other implementations, the first transition curve is determined based on a curvature of the first circular arc and a curvature of the first straight line, a maximum curvature of the first transition curve is the curvature of the first circular arc, and a minimum curvature of the first transition curve is the curvature of the first straight line.

In some other implementations, the second transition curve is determined based on a curvature of the second circular arc and the curvature of the first straight line, a maximum curvature of the second transition curve is the curvature of the second circular arc, and a minimum curvature of the second transition curve is the curvature of the first straight line.

In some other implementations, the third transition curve is determined based on the curvature of the second circular arc and a curvature of the second straight line, a maximum curvature of the third transition curve is the curvature of the second circular arc, and a minimum curvature of the third transition curve is the curvature of the second straight line.

In some other implementations, a radius of the first circular arc is a minimum turning radius of the vehicle, and a minimum central angle of the first circular arc is related to the position of the vehicle within the parking space.

In some other implementations, a radius of the second circular arc is greater than or equal to the minimum turning radius of the vehicle and is less than or equal to twice the minimum turning radius, a central angle of the second circular arc is related to the first circular arc, the second transition curve, the third transition curve, and the second straight line, and the second straight line is related to the position of the vehicle outside the parking space.

In some other implementations, the processing unit 1702 is configured to determine a plurality of parking trajectories by sampling a central angle of the first circular arc and the radius of the second circular arc; and
the processing unit 1702 is configured to screen the plurality of parking trajectories based on a drivable and parkable region of the vehicle to determine the target parking trajectory.

It will be noted that, in this embodiment of this application, for a specific implementation and technical effects of each unit, reference can be further made to corresponding descriptions of the method embodiment shown in FIG. 2.

Referring to FIG. 18, FIG. 18 is a schematic diagram of a structure of a computing device according to an embodiment of this application. As shown in FIG. 18, the computing device 180 may include one or more processors 1801, one or more memories 1802, and one or more communication interfaces 1803. These components may be connected through a bus 1804 or in another way. FIG. 18 shows an example in which the components are connected through the bus 1804.

The communication interface 1803 may be configured to communicate between the computing device 180 and another communication device, such as another computing device. Specifically, the communication interface 1803 may be a wired interface.

The memory 1802 may be coupled to the processor 1801 through the bus 1804 or an input/output port, and the memory 1802 may be integrated with the processor 1801. The memory 1802 is configured to store various software programs and/or a plurality of sets of instructions or data. Specifically, the memory 1802 may be a read-only memory (ROM) or another type of static storage device capable of storing static information and instructions, a random access memory (RAM) or another type of dynamic storage device capable of storing information and instructions, or may be an electrically erasable programmable read-only memory (EEPROM), a compact disc read-only memory (CD-ROM) or another optical disc memory, a compact disc memory (including a compact disc, a laser disc, an optical disc, a digital versatile disc, a Blu-ray disc, and the like), a magnetic disk storage medium or another magnetic storage device, or any other medium that can be used to carry or store desired program code in a form of instructions or data structures and that can be accessed by a computer, but is not limited thereto. The memory 1802 may include a high-speed random access memory, and may also include a non-volatile memory, such as one or more disk storage devices, a flash memory device, or another non-volatile solid-state storage device. The memory 1802 may store an operating system (hereinafter referred to as a system), such as an embedded operating system such as uCOS, VxWorks, or RTLinux. The memory 1802 may further store a network communication program, and the network communication program may be used to communicate with one or more additional devices, one or more user equipment, and one or more terminals. The memory 1802 may exist independently, and is connected to the processor 1801 through the bus 1804. The memory 1802 may alternatively be integrated with the processor 1801.

The memory 1802 is configured to store application code for executing the foregoing solution, and is controlled by the processor 1801 to execute the foregoing solution. The processor 1801 is configured to execute the application code stored in the memory 1802.

The processor 1801 may be a central processing unit, a general-purpose processor, a digital signal processor, an application-specific integrated circuit, a field-programmable gate array or another programmable logic device, a transistor logic device, a hardware component, or any combination thereof. The processor 1801 can implement or execute various example logical blocks, modules, and circuits described in combination with the disclosure of this application. The processor 1801 may alternatively be a combination that implements a determining function, such as a combination including one or more microprocessors or a combination of a digital signal processor and a microprocessor.

In this embodiment of this application, the processor 1801 may be configured to read and execute computer-readable instructions. Specifically, the processor 1801 may be configured to invoke a program stored in the memory 1802 to perform the following operations:

The communication interface 1803 obtains a position of a vehicle outside a parking space and a position of the vehicle within the parking space, where the parking space is a region into which the vehicle parks into or out of which the vehicle parks out; and
determines a target parking trajectory of the vehicle based on the position of the vehicle outside the parking space and the position of the vehicle within the parking space, where a shape of the target parking trajectory includes a transition curve, a straight line, and a circular arc, the transition curve is used to connect the straight line and the circular arc, a curvature of the transition curve continuously changes as a length of the transition curve increases, and the vehicle is configured to park into or park out of the parking space based on the target parking trajectory.

In some implementations, a curvature of a first endpoint of the transition curve used to connect the straight line is the same as a curvature of the straight line, and a curvature of a second endpoint of the transition curve used to connect the circular arc is the same as a curvature of the circular arc.

In some implementations, the length of the transition curve is determined by a difference between the curvature of the first endpoint and the curvature of the second endpoint, and the greater the difference is, the greater the length of the transition curve is.

In some implementations, a quantity of transition curves is equal to a quantity of splicing endpoint pairs, and the splicing endpoint pair includes an endpoint of the transition curve connected to the straight line and an endpoint of the transition curve connected to the circular arc.

In some implementations, the circular arc includes a first circular arc and a second circular arc, the first circular arc is a circular arc within the parking space, and the second circular arc is a circular arc outside the parking space; the transition curve includes a first transition curve, a second transition curve, and a third transition curve; and
the first transition curve is determined by the first circular arc, and the second transition curve and the third transition curve are determined by the second circular arc.

In some implementations, the straight line includes a first straight line and a second straight line, where
the first transition curve is used to connect the first circular arc and the first straight line;
the second transition curve is used to connect the first straight line and the second circular arc; and
the third transition curve is used to connect the second circular arc and the second straight line.

In some implementations, the first transition curve is determined based on a curvature of the first circular arc and a curvature of the first straight line, a maximum curvature of the first transition curve is the curvature of the first circular arc, and a minimum curvature of the first transition curve is the curvature of the first straight line.

In some implementations, the second transition curve is determined based on a curvature of the second circular arc and the curvature of the first straight line, a maximum curvature of the second transition curve is the curvature of the second circular arc, and a minimum curvature of the second transition curve is the curvature of the first straight line.

In some implementations, the third transition curve is determined based on the curvature of the second circular arc and a curvature of the second straight line, a maximum curvature of the third transition curve is the curvature of the second circular arc, and a minimum curvature of the third transition curve is the curvature of the second straight line.

In some implementations, a radius of the first circular arc is a minimum turning radius of the vehicle, and a minimum central angle of the first circular arc is related to the position of the vehicle within the parking space.

In some implementations, a radius of the second circular arc is greater than or equal to the minimum turning radius of the vehicle and is less than or equal to twice the minimum turning radius, a central angle of the second circular arc is related to the first circular arc, the second transition curve, the third transition curve, and the second straight line, and the second straight line is related to the position of the vehicle outside the parking space.

In some implementations, the processor 1801 is configured to:
determine a plurality of parking trajectories by sampling a central angle of the first circular arc and the radius of the second circular arc; and
screen the plurality of parking trajectories based on a drivable and parkable region of the vehicle to determine the target parking trajectory.

It will be noted that, in this embodiment of this application, for a specific implementation and technical effects of each unit, reference can be further made to corresponding descriptions of the method embodiment shown in FIG. 2.

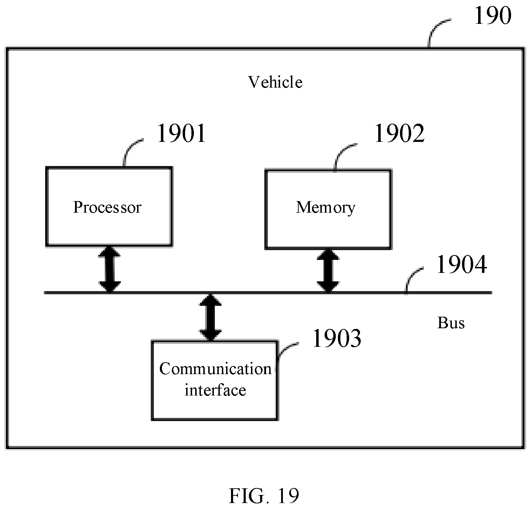

Referring to FIG. 19, FIG. 19 is a schematic diagram of a structure of a vehicle according to an embodiment of this application. As shown in FIG. 19, the vehicle 190 includes one or more processors 1901 and one or more memories 1902. The processor 1901 is coupled to the memory 1902. The memory 1902 is configured to store a computer program. The processor 1901 is configured to invoke and run a computer program, to enable the vehicle 190 to perform the foregoing method for planning a parking trajectory, such as the method in FIG. 2. In some embodiments, the vehicle 190 further includes one or more communication interfaces 1903. The processor 1901, the memory 1902, and the communication interface 1903 may be connected through the bus 1904 or in another way. FIG. 19 shows an example in which the processor 1901, the memory 1902, and the communication interface 1903 are connected through the bus 1904.

This application further provides a computer-readable storage medium. The computer-readable storage medium stores instructions. When the instructions run on at least one processor, the foregoing method for planning a parking trajectory, such as the method in FIG. 2, is implemented.

This application further provides a computer program product. The computer program product includes computer instructions. When the computer instructions are executed by a computing device, the foregoing method for planning a parking trajectory, such as the method in FIG. 2, is implemented.

In the embodiments of this application, words such as "example" or "for example" are used to represent giving an example, an illustration, or a description. Any embodiment or design solution described as "example" or "for example" in this application will not be construed as being preferred or advantageous over other embodiments or design solutions. Exactly, use of the words such as "example" or "for example" is intended to present a related concept in a specific manner.

In the embodiments of this application, "at least one" means one or more, and "a plurality of" means two or more. "At least one of the following items" or a similar expression means any combination of these items, including a single item or any combination of a plurality of items. For example, at least one of a, b, or c may represent a, b, c, (a and b), (a and c), (b and c), or (a, b, and c), where a, b, and c may be singular or plural. "And/or" describes an association relationship between associated objects and indicates that three relationships may exist. For example, A and/or B may indicate the following cases: Only A exists, both A and B exist, and only B exists, where A and B may be singular or plural. The character "/" usually indicates an "or" relationship between the associated objects.

In addition, unless otherwise specified, in embodiments of this application, ordinal words such as "first" and "second" are used to distinguish between a plurality of objects, and are not used to limit sequences, time sequences, priorities, or importance degrees of the plurality of objects. For example, a first device and a second device are merely for ease of description and do not indicate any difference in structure, importance, and the like between the first device and the second device. In some embodiments, the first device and the second device may be a same device.

As used in the foregoing embodiments, based on the context, the term "when..." may be interpreted as "if..." or "after..." or "in response to determining..." or "in response to detecting...". The foregoing descriptions are merely optional embodiments of this application, and are not used to limit this application. Any modification, equivalent replacement, improvement, and the like made in the conception and principle of this application shall fall within the protection scope of this application.

It may be understood by a person of ordinary skill in the art that implementing all or some of the operations in the foregoing embodiments can be accomplished by using hardware or in a manner that the program instructs related hardware. The program can be stored in a computer-readable storage medium. The foregoing storage medium may be a read-only memory, a magnetic disk, an optical disc, or the like.

The foregoing descriptions are merely specific implementations of this application, but the protection scope of this application is not limited thereto. Various equivalent modifications or replacements readily figured out by any technician who is familiar with this technical field within the technical scope disclosed in this application shall fall within the protection scope of the present application. Therefore, the protection scope of this application shall be subject to the protection scope of the claims.

## Claims

1. A method for planning a parking trajectory, wherein the method comprises:
obtaining (S201) a position of a vehicle outside a parking space and a position of the vehicle within the parking space, wherein the parking space is a region into which the vehicle is about to park into or out of which the vehicle is about to park out; and
determining (S202) a target parking trajectory of the vehicle based on the position of the vehicle outside the parking space and the position of the vehicle within the parking space, wherein the target parking trajectory comprises a transition curve, a straight line, and a circular arc, one transition curve connects one straight line and one circular arc, a curvature of the transition curve continuously changes as a length of the transition curve increases, and the vehicle is configured to park into or park out of the parking space based on the target parking trajectory.

2. The method according to claim 1, wherein a curvature of a first endpoint of the transition curve used to connect the straight line is the same as a curvature of the straight line, and a curvature of a second endpoint of the transition curve used to connect the circular arc is the same as a curvature of the circular arc.

3. The method according to claim 2, wherein the length of the transition curve is determined by a difference between the curvature of the first endpoint and the curvature of the second endpoint, wherein the greater the difference is, the greater the length of the transition curve is.

4. The method according to claim 1, wherein the transition curve has a first endpoint and a second endpoint, a curvature of the first endpoint is the same as a curvature of the straight line connected to the first endpoint of the transition curve, and a curvature of the second endpoint is the same as a curvature of the circular arc connected to the second endpoint of the transition curve.

5. The method according to any one of claims 1 to 4, wherein a quantity of transition curves is equal to a quantity of splicing endpoint pairs, wherein the splicing endpoint pair comprises an endpoint of the transition curve connected to the straight line and an endpoint of the transition curve connected to the circular arc.

6. The method according to claim 5, wherein
the circular arc comprises a first circular arc and a second circular arc, the first circular arc is a circular arc within the parking space, and the second circular arc is a circular arc outside the parking space;
the transition curve comprises a first transition curve, a second transition curve, and a third transition curve; and
the first transition curve is determined by the first circular arc, and the second transition curve and the third transition curve are determined by the second circular arc.

7. The method according to claim 6, wherein the straight line comprises a first straight line and a second straight line, wherein
the first transition curve connects the first circular arc and the first straight line;
the second transition curve connects the first straight line and the second circular arc; and
the third transition curve connects the second circular arc and the second straight line.

8. The method according to claim 6 or 7, wherein the first transition curve is determined based on a curvature of the first circular arc and a curvature of the first straight line, a maximum curvature of the first transition curve is the curvature of the first circular arc, and a minimum curvature of the first transition curve is the curvature of the first straight line.

9. The method according to any one of claims 6 to 8, wherein the second transition curve is determined based on a curvature of the second circular arc and the curvature of the first straight line, a maximum curvature of the second transition curve is the curvature of the second circular arc, and a minimum curvature of the second transition curve is the curvature of the first straight line.

10. The method according to any one of claims 6 to 9, wherein the third transition curve is determined based on the curvature of the second circular arc and a curvature of the second straight line, a maximum curvature of the third transition curve is the curvature of the second circular arc, and a minimum curvature of the third transition curve is the curvature of the second straight line.

11. The method according to any one of claims 6 to 10, wherein a radius of the first circular arc is a minimum turning radius of the vehicle, and a minimum central angle of the first circular arc is related to the position of the vehicle within the parking space.

12. The method according to any one of claims 6 to 11, wherein a radius of the second circular arc is greater than or equal to the minimum turning radius of the vehicle and is less than or equal to twice the minimum turning radius, a central angle of the second circular arc is related to the first circular arc, the second transition curve, the third transition curve, and the second straight line, and the second straight line is related to the position of the vehicle outside the parking space.

13. The method according to claim 11 or 12, wherein the method further comprises:
determining a plurality of parking trajectories by sampling a central angle of the first circular arc and the radius of the second circular arc; and
screening the plurality of parking trajectories based on a drivable and parkable region of the vehicle to determine the target parking trajectory.

14. An apparatus (170) for planning a parking trajectory, wherein the apparatus comprises:
a communication unit (1701), configured to obtain a position of a vehicle outside a parking space and a position of the vehicle within the parking space, wherein the parking space is a region into which the vehicle is about to park into or out of which the vehicle is about to park out; and
a processing unit (1702), configured to determine a target parking trajectory of the vehicle based on the position of the vehicle outside the parking space and the position of the vehicle within the parking space, wherein the target parking trajectory comprises a transition curve, a straight line, and a circular arc, one transition curve connects one straight line and one circular arc, a curvature of the transition curve continuously changes as a length of the transition curve increases, and the vehicle is configured to park into or park out of the parking space based on the target parking trajectory.

15. A vehicle (190, 10), comprising a processor (1901) and a memory (1902), the processor being coupled to the memory, the memory being configured to store a computer program, and the processor being configured to invoke and run the computer program, to enable the vehicle to perform the method according to any one of claims 1 to 13.

16. A computing device (180), comprising a processor (1801) and a memory (1802), the processor being coupled to the memory, the memory being configured to store a computer program, and the processor being configured to invoke and run the computer program, to enable the computing device to perform the method according to any one of claims 1 to 13.

17. A computer-readable storage medium, wherein the computer-readable storage medium stores a computer program, and the computer program comprises instructions used to perform the method according to any one of claims 1 to 13.
